# EUROPEAN PATENT SPECIFICATION

(11) **EP 3 344 919 B1**
(45) Date of publication and mention of the grant of the patent: **09.10.2019**
(21) Application number: 16760007.1
(22) Date of filing: 24.08.2016
(51) Int. Cl.: F21S 41/16, F21S 41/675, F21V 9/30

(54) **A LIGHTING SYSTEM AND A LIGHTING METHOD**
BELEUCHTUNGSSYSTEM UND BELEUCHTUNGSVERFAHREN
SYSTÈME D'ÉCLAIRAGE ET PROCÉDÉ D'ÉCLAIRAGE

(30) Priority: 01.09.2015 EP 15183291
(43) Date of publication of application: 11.07.2018
(73) Proprietor: Lumileds Holding B.V., 1118 CL Schiphol (NL)
(72) Inventor: HECHTFISCHER, Ulrich, 52068 Aachen (DE); EPMEIER, Matthias, 52068 Aachen (DE); JACOB, Jerry, Gregory, 52068 Aachen (DE)
(74) Representative: Rüber, Bernhard Jakob
(86) International application number: PCT/EP2016/069930
(87) International publication number: WO 2017/036871

(56) References cited:
- US-A1- 2002 196 636
- US-A1- 2011 051 216
- US-A1- 2013 258 689
- US-A1- 2014 340 918
- US-A1- 2014 362 600
- US-A1- 2015 036 107
- US-A1- 2015 191 115

## Description

### FIELD OF THE INVENTION

This invention relates to lighting systems and lighting methods, in particular making use of laser diodes and phosphor conversion of the laser diode output.

### BACKGROUND OF THE INVENTION

The use of laser diode based lighting is increasing.

For example, in modern automotive headlighting, there is a trend towards adaptive lighting systems in which the light distribution can be changed dynamically. The controllability of diodes and laser diodes offers many opportunities for dynamic and intelligent lighting.

For example, one desired feature for automotive headlighting is to have a high intensity beam, but with a well-defined and moving dark section to reduce the light output to an oncoming car, to avoid glare. Alternatively, illumination may be desired to illuminate a given road sign, or an obstacle that has been detected by an on-board camera of the vehicle.

Technically, such dynamic systems can be realized with different approaches, with different levels of performance versus complexity. Examples are switchable mechanical apertures, LED or laser diode matrix lighting, micro-displays, or laser scanners. See e.g., for a matrix lighting related approach, US20140362600A1 disclosing controllable light beams illuminating a photoluminescent material imaged by an optical system into the far field, and, for a micro-display based approach, US20150191115A1.

This invention is concerned in particular with micro-display based approaches.

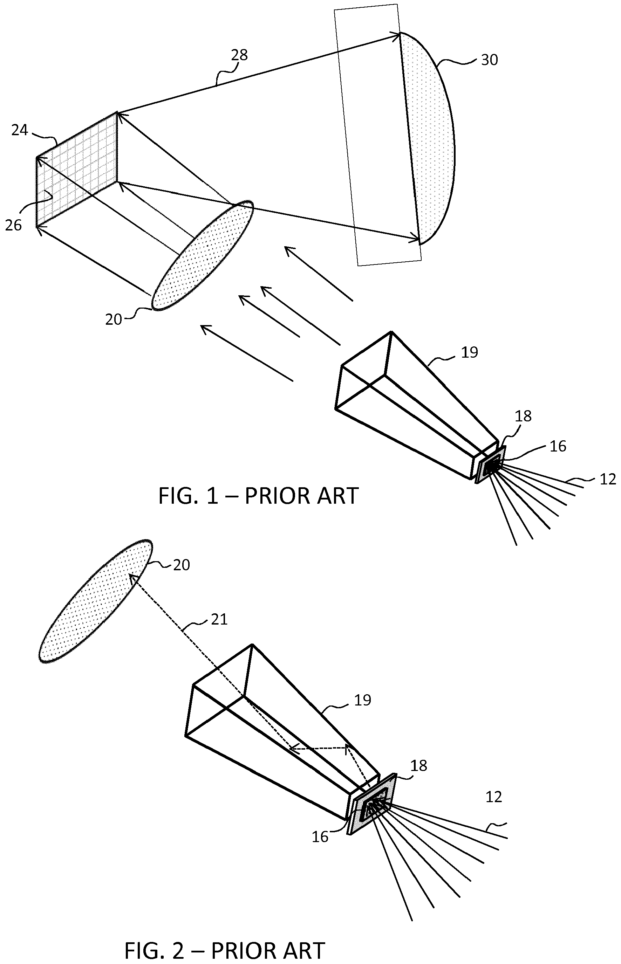

Figure 1 shows in schematic form a known micro-display based lighting system.

A plurality (e.g. 6) blue laser beams 12, of approximately 2-4 W optical power each, are directed toward a common target area 16 on a phosphor screen 18, thereby generating at the target area a high-luminance white light spot. Since the spot may be made small, it may be used to illuminate a micro-display 24 (e.g. a digital mirror display, digital mirror device or a reflective LCD) in a similar fashion to video projectors (although such projectors typically further comprise a phosphor wheel to generate different colours of light, time sequentially, rather than steady white light). The generated white light is transferred from the phosphor, via a collimating element 19 (in this case a total internal reflection cone) and display optic 20, onto the surface of the micro-display 24, which comprises a plurality of controllable reflective pixels 26 which allow light to be only reflected from desired points. In this way, an output beam 28 with a desired output pattern and intensity distribution may be generated from the surface of the micro-display and projected, via a projection lens 30, toward the target of the illumination (for example the road).

By suitable control of the pixels 26 a wide variety of beam patterns, shapes or images may be created from the micro-display, allowing for a highly versatile adaptive lighting system.

A problem with this approach however is low optical efficiency. The light source must be operated at an intensity sufficient for illuminating the brightest part of the output beam pattern 28 on reflection from the micro-display 24 surface. Darker points or regions of the output beam pattern are created by controlling appropriate pixels 26 to absorb some or all of the light which falls incident at them. This, however, wastes a great deal of the generated light. Since all regions of the display are illuminated by a single common light spot, much high intensity light is generated and directed toward pixels at which it is not required. A surplus of light must therefore be generated in illuminating the micro-display, increasing overall power consumption (by the laser sources), and resulting in difficulties in terms of heat generation.

One proposed solution has been to pre-shape the light source at the phosphor plate via shaping optics so as to generate a non-uniform fixed pattern or distribution of light to then be propagated toward the micro-display. For example, the laser beams 12 may be arranged or adapted to form at the phosphor a light spot having a non-uniform output intensity. For instance, the light spot could be shaped/adapted in this way so as to direct more light to the centre of the display, if it is desired that the output beam pattern be brightest at its centre-most region. Alternatively, optical elements arranged between the phosphor and the micro-display may be adapted to re-shape the light distribution.

However, such solutions remain problematic in terms of efficiency, in particular in the case of adaptive lighting applications, where the output pattern of the generated beam 28 is desired to be changeable between a wide range of different particular shapes and intensity distributions. In these cases, much light is still wasted, since the shape of the light spot must be suitable for generating all of the desired output beam patterns, which may necessarily entail excess light being directed toward darker regions of certain of the output patterns. For example, if the system is designed to produce both high beam and low beam patterns, on switching to low beam generation, source light sufficient for generating the high beam would have to be produced at the phosphor nonetheless, and then dumped. Furthermore, it would not be viable simply to dim the entire light source for low-beam generation, since then the bright regions of the low beam would be too weak.

There is therefore a need for a micro-display based lighting system which allows for improved optical efficiency, and consequently reduced overall power consumption and heat generation.

### SUMMARY OF THE INVENTION

The invention is defined by the claims.

According to an aspect of the invention, there is provided a lighting system comprising:
a plurality of laser source arrangements for generating a plurality of laser output beams, wherein each laser source arrangement is individually addressable;
a phosphor screen arrangement to which the laser output beams are directed for generating a combined phosphor-converted output beam pattern, wherein the phosphor screen arrangement comprises a plurality of surface regions, each surface region arranged for receiving light from one of the plurality of laser source arrangements; and
a controller for selectively addressing the plurality of laser source arrangements in order to generate from the phosphor screen arrangement a phosphor-converted output beam pattern having a pre-determined output pattern, the phosphor-converted output beam pattern being formed of a plurality of co-operating component beam portions, each generated from a respective one of the plurality of surface regions of the phosphor screen arrangement,
wherein the phosphor-converted output beam pattern is projected via one or more optical elements from the phosphor screen arrangement onto a pixelated display unit, the optical elements being arranged between the phosphor screen arrangement and the pixelated display unit and adapted to project the output beam pattern onto the display in such a way that each of the component beam portions is imaged onto a respective receiving portion of the display.

Each laser source arrangement may comprise one or more laser diodes, each adapted to generate a single laser output beam. A single laser source arrangement may therefore generate more than one laser output beam. Multiple laser diodes of a single laser source arrangement may or may not be individually controllable with respect to one another.

The phosphor screen arrangement comprises a plurality of surface regions or surface elements, each arranged to receive light from an individually controllable laser source arrangement. In particular, each may be arranged, in examples, to receive light from a separate, dedicated individually controllable laser source arrangement. In this way, the amount of light directed to each surface region may be independently controlled. The overall output pattern or distribution of the light generated from the phosphor screen arrangement is dependent upon the arrangement of light outputs across the set of surface regions. Since the light produced at each surface region is individually adjustable, this allows for generating from the phosphor an output beam pattern (for projection onto the display unit) having a pattern, shape or intensity distribution which is adjustable, by means of adjusting the outputs of the plurality of laser source arrangements.

Note that 'projection' in the present context is to be interpreted in an entirely general sense as meaning simply directed or propagated, and is not to be construed as being limiting for example to any form of optical manipulation or shaping.

Optical efficiency may therefore be improved by controlling the laser source arrangements to generate from the phosphor an output beam having a defined output pattern which correlates with a reflectivity pattern of the pixels of the display unit. In this way, light is only directed to regions of the display unit where it is needed, and will not be sacrificed in generating the secondary output beam from the surface of the display.

Note that in alternative examples, two or more of the phosphor regions may be arranged to receive light from the same single, individually controllable laser source arrangement. In addition, in examples, one or more of the phosphor regions may be adapted to receive light from two or more of the laser source arrangements.

In some examples, the phosphor screen arrangement may comprise a single, integral phosphor screen element, being effectively divided into a series of notional surface regions or segments, each arranged to receive light from a separate one of the individually controllable laser source arrangements. In these cases, the surface regions may not necessarily be separated or otherwise distinguished from one another in any physically tangible way. In many cases, the regions may simply be notional regions, in the sense that they are defined and distinguished only in virtue of the source of their incident illumination.

According to other examples however, the phosphor screen arrangement may comprise a plurality of spatially separated phosphor screen elements, each providing a respective one or more of the plurality of surface regions. In this case, certain optical elements may be provided in order to collect the outputs of the plurality of spatially separated elements and generate a collective output beam pattern having a defined output pattern.

The output beam pattern is projected from the phosphor onto the pixelated display unit via one or more optical elements arranged between the two. The optical elements might include for example collimating elements, such as TIR collimators or collimating lenses such as Fresnel lenses, or other focussing or projecting lenses. The optical elements are provided to prevent beam portions generated from the different surface portions from mixing en route toward the display, ensuring that the beam pattern which they produce is preserved and directly imaged onto the surface of the display unit.

In examples, the output beam pattern may comprise a single combined beam having a particular profile or shape. The profile or shape may be defined for example by the plurality of co-operating component beam portions which form it. In other examples, the output beam pattern may not comprise a single combined beam, but may rather comprise a light distribution in which component beam portions are spatially separated or distinct.

The pixelated display unit may be adapted to receive as input the phosphor-converted output beam pattern, and to generate as output a secondary output beam having a second predetermined output pattern.

The pixelated display unit may comprise an array of pixels, each pixel being individually switchable between a high light-output mode state and a low light-output mode state, and wherein the second pre-determined output pattern is dependent upon the output mode states of the pixels. In a high output mode state, a pixel may be adapted to reflect (or transmit) most or all light falling incident on it. In a low output mode state, a pixel may be adapted to absorb or sacrifice most or all light falling incident on it.

The pre-determined output pattern of the phosphor converted output beam pattern may be determined by the controller in dependence upon the output mode states of the array of pixels. In particular, the predetermined output pattern of the phosphor converted output beam pattern may be determined by the controller so as to minimise the amount of light received at pixels of the array which are in a low output mode state.

In examples, the pixels may each be individually adjustable across a range of output mode states. For example, the proportion of incident light which is sacrificed - as opposed to reflected (or transmitted) - may be adjustable across a range of values. The range of output mode states may comprise a continuous spectrum of output states, each corresponding to a different ratio of absorption-reflection, for instance. Alternatively, the range of output mode states may comprise a discrete set of output mode states.

Each laser source arrangement may have an individually controllable light output intensity.

Two or more of the laser output beams may be arranged to overlap at one or more areas of the phosphor screen arrangement. In other words, the boundaries between the surface regions need not be sharp, but may be blurred to some extent. High contrast in the phosphor-converted output beam pattern is not necessary, since any fine tuning of the beam shape or distribution may be performed subsequently by the display unit. This may allow for simplification in certain design aspects of the laser sources and phosphor target, since the required tolerances for their light beams can be partially relaxed.

Each laser source arrangement may comprise one or more laser diodes.

The pixelated display unit may, in examples, be a digital mirror display, a digital mirror device or a reflective or transmissive LCD (liquid-crystal display).

The pixelated display unit may in particular be a pixelated micro-display. The use of lasers as light sources allows for generating from the phosphor screen arrangement very small point sources of light which in turn allows for independent illumination of multiple distinct sectors or regions of the micro-display unit having overall dimensions far smaller for example than the typical output beam width of just a single LED element. For example, embodiments of the system may in examples incorporate micro-display units of less than 1 inch x 1 inch, and even for example less that 1cm x 1cm.

The lighting system may be used in a vehicle headlight.

Examples in accordance with another aspect of the invention provide a method of generating a light beam comprising:
controlling a plurality of laser source arrangements to generate a plurality of laser output beams in a pre-determined pattern;
directing the plurality of laser output beams toward a plurality of surface regions of a receiving phosphor screen arrangement, to thereby generate from the phosphor screen arrangement a phosphor-converted output beam pattern having a pre-determined output pattern, the phosphor-converted output beam pattern being formed of a plurality of co-operating component beam portions, each generated from a respective one of the plurality of surface regions of the phosphor screen arrangement; and
projecting the phosphor-converted output beam pattern, via one or more optical elements, onto a pixelated display unit, the optical elements being arranged between the phosphor screen arrangement and the pixelated display unit and adapted to project the output beam pattern onto the display in such a way that each of the component beam portions is imaged onto a respective receiving portion of the display.

Examples of the method may further comprise adjusting light output mode states of pixels of the pixelated display unit so as to generate from the display unit a secondary output beam having a second predetermined output pattern.

The plurality of laser source arrangements may furthermore be controlled so as to generate from the phosphor screen arrangement a phosphor-converted output beam pattern having an output pattern which is dependent upon the output mode states of the pixels of the display unit.

In particular, the plurality of laser source arrangements may be controlled so as to generate from the phosphor screen arrangement an output beam pattern having an output pattern which minimises the amount of light which is received at pixels of the display unit which are in a low output mode state.

### BRIEF DESCRIPTION OF THE DRAWINGS

Examples of the invention will now be described in detail with reference to the accompanying drawings, in which:
- Fig. 1: shows a known micro-display based laser-source lighting system;
- Fig. 2: shows the phosphor screen arrangement for a known micro-display based laser-source lighting system;
- Fig. 3: shows an improved phosphor screen arrangement for a micro-display based laser-source lighting system;
- Fig. 4: shows a second view of the improved phosphor screen arrangement;
- Fig. 5: illustrates a first example micro-display based laser-source lighting system comprising the improved phosphor screen arrangement;
- Fig. 6: illustrates a second example micro-display based laser-source lighting system comprising the improved phosphor screen arrangement;
- Fig. 7: illustrates a first example micro-display based laser-source lighting system comprising a phosphor screen arrangement formed of a plurality of spatially separated phosphor screen elements;
- Fig. 8: illustrates a second example micro-display based laser-source lighting system comprising a phosphor screen arrangement formed of a plurality of spatially separated phosphor screen elements;
- Fig. 9: illustrates a first example laser diode arrangement for generating laser beams to be directed toward a phosphor screen;
- Fig. 10: illustrates a first example irradiance pattern for illuminating a phosphor screen;
- Fig. 11: illustrates a second example irradiance pattern for illuminating a phosphor screen;
- Fig. 12: illustrates a second example laser diode arrangement for generating laser beams to be directed toward a phosphor screen;
- Fig. 13: illustrates a third example laser diode arrangement for generating laser beams to be directed toward a phosphor screen;
- Fig. 14: illustrates a first example micro-display configuration, for producing alternately a low and high beam headlight output;
- Fig. 15: illustrates a second example micro-display configuration, for producing a high beam headlight output
- Fig. 16: illustrates a third example micro-display configuration, for producing a horizontally adjustable high beam headlight output; and
- Fig. 17: illustrates a fourth example micro-display configuration, for producing a horizontally adjustable high beam headlight output.

### DETAILED DESCRIPTION OF THE EMBODIMENTS

The invention provides a lighting system for generating patterned phosphor-converted output beams for projection onto a pixelated display unit. A phosphor screen arrangement comprises a plurality of separate light-receiving surface regions, each region illuminated by an individually addressable laser source arrangement. By controlling the relative intensity of light directed to each of the surface regions, a broad range of different output beam patterns can be created from the phosphor screen arrangement. The generated beam pattern may be controlled so as to correspond with the pixel configuration of the display unit, such that light is directed only toward pixels which are active, rather than inactive. This enables significant improvements in optical efficiency, since light need not be wasted through propagation toward pixels which are configured simply to discard it.

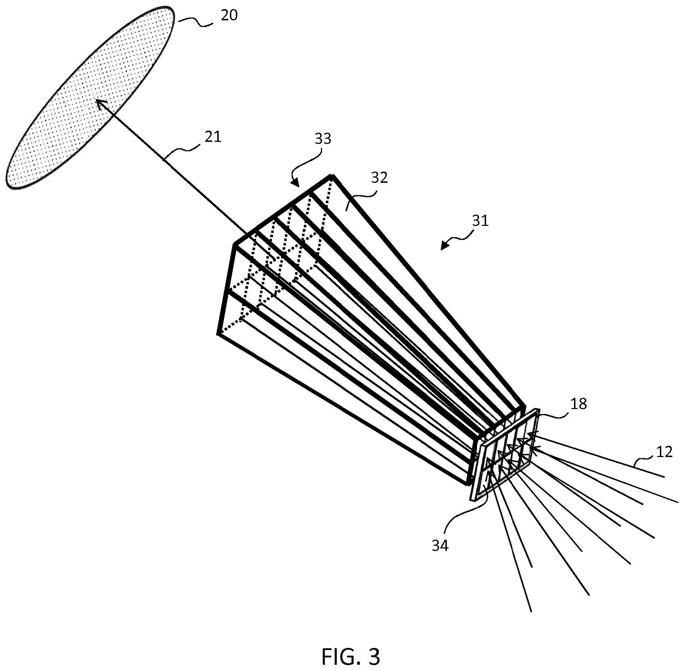

The principle of the invention is illustrated by Figures 2 and 3, wherein Figure 2 shows a conventional phosphor screen arrangement 18 in which a plurality of blue laser beams 12 are directed toward a common target area 16 on the phosphor screen 18. The plurality of laser beams combine at the target area to generate a high intensity white light spot, which is then directed, via a TIR collimator 19, towards imaging optics (in this case an imaging lens) 20 for propagation toward a micro-display unit (not shown). The path of an example light ray 21 from the phosphor screen 18 to the imaging optics 20, via the collimator 19, is shown.

An improved phosphor screen arrangement 18, as embodied by aspects of the present invention, is illustrated schematically in Figure 3. The surface of the phosphor 18 is divided into an array of distinct surface sections or regions 34, in the example shown each region being illuminated by a separate one of an array of laser beams 12. As will be clear from the discussion above, there may be multiple laser beams of a laser source "arrangement" associated with each phosphor region. For ease of explanation, individual laser beams are considered in the examples below. Each laser beam may be switched on or off independently, and hence the light directed to each of the array of surface sections 34 may be individually controlled.

When projected, via collimator bundle 31, and imaging optics 20, onto a receiving micro-display, each region of the phosphor screen illuminates a different corresponding region on the display. By selectively controlling the illumination across the different phosphor regions 34, the distribution of light across the micro-display 24 may be varied to generate a broad range of different desired patterns.

The collimator bundle 31 is provided to prevent the individual light outputs of each of the respective surface regions 34 of the phosphor screen 18 from spreading and intermixing on their journey toward the micro-display - in which case the output pattern generated by phosphor 18 would become blurred or lost, and consequently would not be properly mapped onto the receiving regions of the micro-display. The collimator bundle 31 is formed of a set of individual collimator units 32, each optically isolated from one another, and together arranged such that their respective light input windows and light output windows cooperate to form common light input and light output areas 33 of the collimator bundle 31.

Each of the surface regions 34 of the phosphor is aligned with the light input window of a respective one of the collimator units 32. Light emitted by each surface region is collimated in isolation from the light outputs of the other surface regions before being emitted from the common light exit area 33 from which it propagates toward the imaging optic 20 and further towards the micro-display (not shown). The individual collimation of light outputs ensures that the collective light output pattern generated by the phosphor screen arrangement 18 as a whole is faithfully imaged onto the surface of the micro-display 24.

It should be noted that although the particular example system illustrated in Figure 3 comprises a reflective micro-display unit, the invention is not limited to such embodiments, and alternative examples may instead make use of transmissive-type displays, such as a transmissive LCD display.

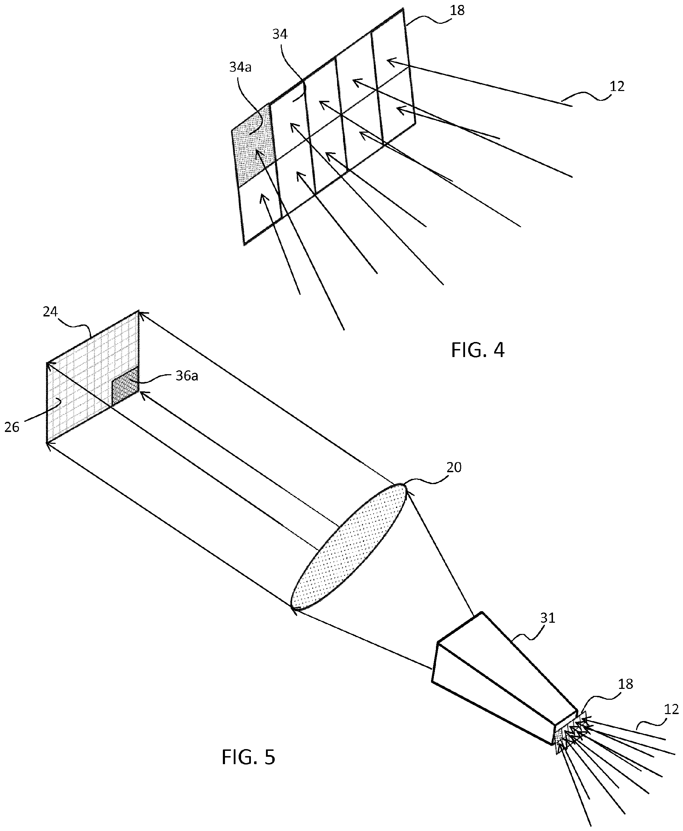

The operation of an example lighting system in accordance with the principles described above is schematically illustrated in Figures 4 and 5. Figure 4 depicts a close-up view of the phosphor screen 18 of Figure 3, the array of surface regions 34 shown illuminated by individual laser beams 12. In Figure 5, the example phosphor screen is shown as comprised within an example lighting system arrangement, wherein white light generated by the phosphor 18 is propagated via collimator bundle 31 and display optics 20 onto the surface of the pixelated micro-display unit 24.

A sample surface region 34a of the phosphor 18 is indicated in Figure 4. As shown in Figure 5, on stimulation of the region 34a by a laser source, a corresponding (inverted) image 36a of the illuminated region 34a is projected via a respective collimator unit of collimator bundle 31 and via imaging optics 20 onto the surface of micro-display 24. The projected image 36a of region 34a on the display is shown highlighted in Figure 5. As will be appreciated, each of the array of phosphor regions 34, on illumination by a laser source, will map onto its own corresponding region of the micro-display. By adjusting the light delivered to each of the phosphor regions, therefore, a range of different light patterns may be created across the surface of the micro-display 24.

The micro-display 24 comprises an array of individually addressable pixels 26, each controllable to either reflect the light which falls incident at them, or to absorb or otherwise discard the incident light. By adjusting the reflectivity modes across the array of pixels, the micro-display may be controlled so as to generate from its surface output beams of variable shapes and patterns. Bright regions of the output pattern are created by pixels in high reflectivity mode. Dark regions of the output pattern are created by pixels in low-reflectivity mode.

Note that by low-reflectivity mode is meant a mode in which the pixel is configured to discard or deflect some or all of the light falling incident on it, and is not to be interpreted as meaning that the intrinsic reflectivity of the pixel itself is changed.

Light directed onto pixels which are switched into a low-reflectivity mode is discarded by for example absorption. This light is therefore wasted. The efficiency of the lighting system is therefore significantly improved if light is only generated and directed onto pixels which are in a high reflectivity mode. The segmented phosphor screen of embodiments of the present invention allows for such functionality, since, by stimulating different regions 34 of the phosphor screen, different regions may correspondingly be illuminated on the surface of the micro-display. By only stimulating those regions of the phosphor 18 which image onto regions of the micro-display in which pixels 26 are switched into high-reflectivity mode, much light may be conserved. This in turn leads to reductions in the power consumption of the system, and also lessens overall heat generation by the lasers, mitigating consequent cooling issues.

Note that although in the example shown, a collimator bundle is used to image the light output pattern of the phosphor screen 18 onto the micro-display 24 (via optics 20), in alternative examples, other imaging means might alternatively be used. For example, a bundle of tapered optical fibres may be used in a similar way to the collimator bundle to provide optically isolated collimation of each of the outputs of the surface regions. Alternatively, a collimating lens may instead be employed, for example a Fresnel lens, adapted to project input light rays along a common parallel output axis.

The number of unique surface regions required for significant improvements in efficiency is not large. Indeed, as few as two segments may realise significant benefits. This may be the case for example where the lighting system is used within a headlight module to generate high beam and low beam light output modes. In most cases, eight distinct surface segments 34 may be sufficient.

The display unit may typically comprise many more pixels 26 (e.g. 100000 or more) than the number of surface regions comprised by the phosphor screen 18. The display unit 24 allows for generation of a high-resolution output beam, having sharply defined features and sharp light cut off between bright and dark regions. A high density of pixels may therefore be provided.

The density of phosphor screen surface regions may be significantly lower than the density of micro-display pixels, since it is not necessary that the initial phosphor screen output beam be patterned to a high resolution. Substantial improvements in efficiency may be achieved even where single phosphor surface portions map onto relatively large areas of the micro-display surface, containing a sizeable number of individual pixels.

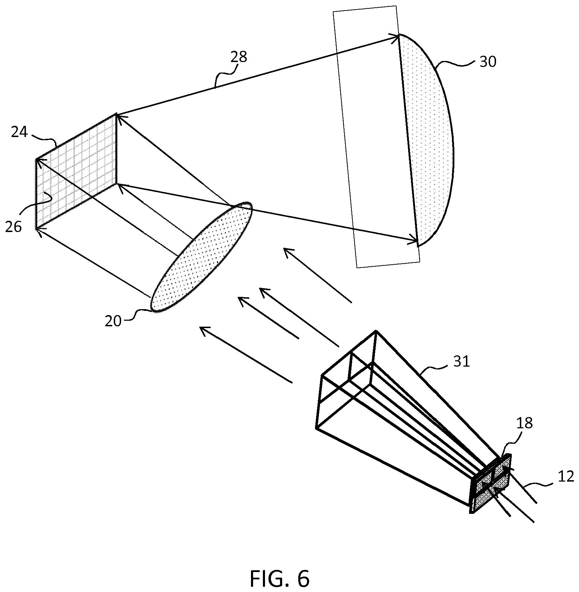

Figure 6 shows an example system comprising a phosphor screen having only three distinct surface regions for example. Here, as in the example of Figure 3, a TIR collimator bundle is provided, with one distinct collimator for each of the three surface regions.

In examples, the pixels of the display unit may be adjustable between a range of different reflectivity modes, in order to generate reflected pixel outputs across a range of intensities. This may be achieved for example through controlling the pixels to execute suitable duty cycles of low and high reflectivity modes, the intensity being adjustable by means of controlling the frequency of such cycles. This would allow more subtle and sophisticated output beam patterns to be generated from the display. In this case, it may be desirable that the intensity of light directed to different receiving regions of the display is adjustable between a range of values.

In these or other examples, laser sources may be provided which are operable across a range of output intensities. In this way the individual surface regions of the phosphor 18 are not only controllable between a binary ON and OFF state, but may also be dimmed across a range of brightnesses. This in turn allows that corresponding receiving regions of the micro-display 24 may be supplied with light of differing intensities.

In examples, the surface portions need not be separated or otherwise distinguished from one another in any physically tangible way. In many cases, the regions may simply be notional regions, in the sense that they are defined and distinguished only in virtue of the source of their incident illumination.

The plurality of surface regions 34 may, as in the example of Figure 4, comprise a contiguous array of regions. However, in other examples, the surface regions may together comprise a less ordered arrangement, for example a random distribution of regions across the phosphor surface. The surface regions may furthermore be either contiguous or non-contiguous with respect to one another.

One or more of the surface regions may in some cases overlap with one another, where the laser beams 12 are arranged to coincide to some extent at the surface of the phosphor.

The surface regions may form a grid pattern, as in the example of Figure 4, but may in alternative examples form different regular or irregular shaped arrangements, including but not limited to a circular pattern, triangular pattern or hexagonal pattern.

The surface regions may be oblong in shape, as in Figure 4, or may alternatively comprise any other desired shape, for example triangular, circular, elliptical or hexagonal.

The surface regions may all be of a uniform size and/or shape, or may comprise different shapes and/or sizes.

The boundaries between the phosphor surface regions 34 need not be sharp; the phosphor need not generate a high contrast light source. High contrast in the phosphor-converted output beam is not necessary, since any fine tuning of the beam shape or distribution may be performed subsequently by the display unit. This may allow for simplification in certain design aspects of the laser sources and phosphor target, since the required tolerances for the light beams can be partially relaxed.

In the examples described above, the phosphor regions comprise sections or segments of a single, integral phosphor screen element. However, this is not essential. According to an alternative set of examples, the phosphor regions may instead be regions or surfaces of a plurality of distinct phosphor elements, being for example spatially separated from one another.

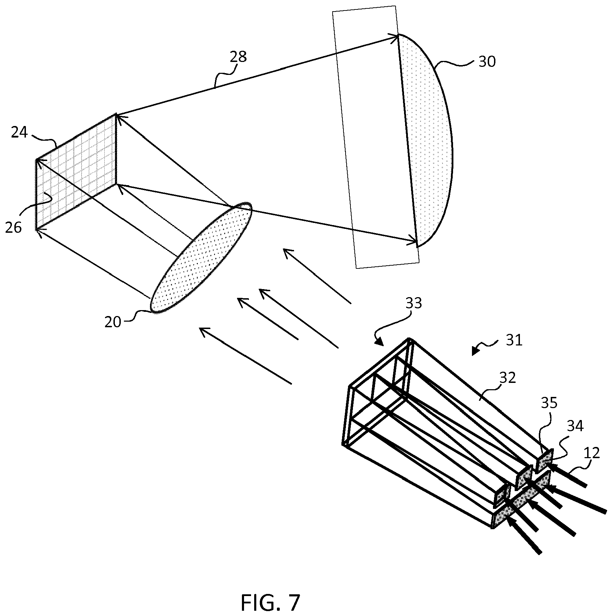

Figure 7 shows a first example of a system comprising such a phosphor screen arrangement. The system comprises four distinct phosphor screen elements 35, each providing a single phosphor screen surface portion 34, and each illuminated by a separate, individually controllable laser beam 12. The phosphor screen elements 35 are spatially separated from one another, and arranged in an array formation across a common plane. Each phosphor screen element is aligned with the optical input window of a respective collimator unit 32, the collimators together forming a collimator bundle 31 having a light output area 33 formed of the contiguous arrangement of the light output windows of each of the individual collimators 32.

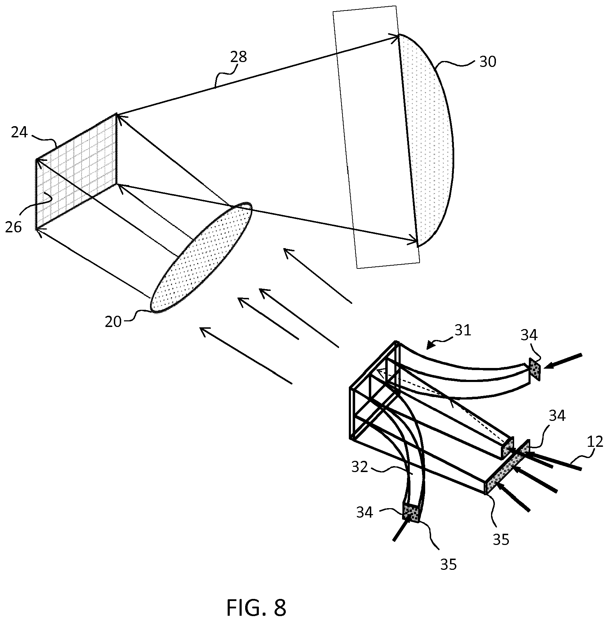

A second example is shown in Figure 8. The system of this example comprises the same set of phosphor elements 35 as the example of Figure 7 described above, but wherein two of the phosphor elements have been displaced out of the common plane containing the remaining elements, and disposed at respective points on either side. The surfaces of the two displaced phosphor elements do not face in the direction of micro-display 24, but are provided with curved collimator elements 32 which channel and redirect their respective light outputs back into the same light exit plane as the remaining phosphor screen elements.

Such an embodiment provides greater flexibility in the configuration and arrangement of the system. For example, it allows that the laser sources may be arranged across a greater area, improving heat dissipation.

Also note that examples of the system are able to provide high resolution output with improved optical efficiency, but without the requirement for moving parts. In some alternative systems, for example, optical efficiency may be targeted through use of a laser scanning approach, which allows light output across different regions of a micro-display to be varied. However, such laser scanning approaches require the implementation of fragile micromechanical scanning mirrors, which increase complexity in both design and operation, and reduce reliability of the system over the long term. Embodiments of the present system are able to achieve the same improvement in efficiency, but with a fundamentally solid state design.

The micro-display unit may, according to examples, be a digital mirror display, a digital mirror device or reflective or transmissive LCD.

Various options exist for the generation and arrangement of the plurality of individually addressable laser sources 12.

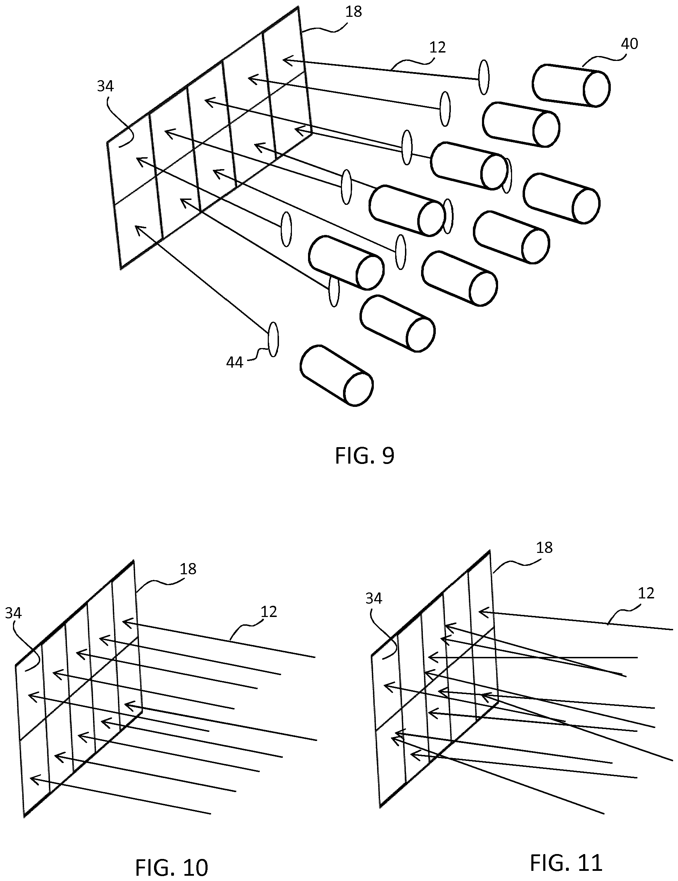

A first example arrangement is shown in Figure 9. An assembled array of blue laser diodes 40 generates a plurality of blue laser light beams 12, which are directed, via a correspondingly arranged array of focussing optics 44 onto respective surface regions 34 of the phosphor screen 18. The array of diodes is arranged having greater spacing or pitch than the receiving surface regions, i.e. the focussing optics provide at the phosphor a de-magnified image of the array.

The irradiance of the phosphor 18 surface by the various laser sources may be uniform, as illustrated in Figure 10, wherein the array of laser beams 12 are directed to respective points on the surface of the phosphor which are evenly distributed. In alternative examples, however, the laser beams may be arranged so as to create a non-uniform irradiance pattern. An example of such an arrangement is shown in Figure 11. A non-uniform irradiance pattern has the advantage that the irradiance pattern across the micro-display can be to some extent pre-shaped in order to match the desired output beam pattern (from the micro-display) as best as possible.

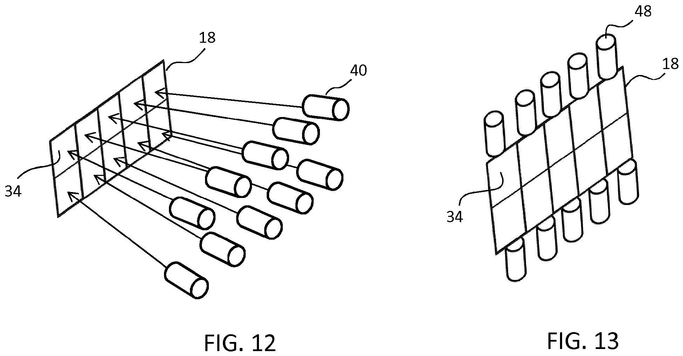

As shown in Figure 12, the phosphor target may be pixelated, each pixel arranged to receive light from one of an array of spatially displaced laser diodes 40. However, in alternative examples (as illustrated in Figure 13), the phosphor may not be illuminated by means of spatially separated laser diodes, but may rather consist of an array of phosphor segments 34, each of which is close-pumped by an integrated laser diode 48.

It should be noted that although in examples described above, phosphor targets (i.e. surface regions of phosphor screen arrangements) are provided or shown operating in 'transmissive mode', wherein phosphor-converted light is emitted from the side of the phosphor target opposite to the side which is illuminated by the laser source, embodiments of the invention are not limited to this configuration. In alternative examples, the phosphor screen arrangements may instead be configured or provided operating in 'reflective' mode wherein phosphor converted light is emitted from the same side of the phosphor target as is being illuminated by the laser sources.

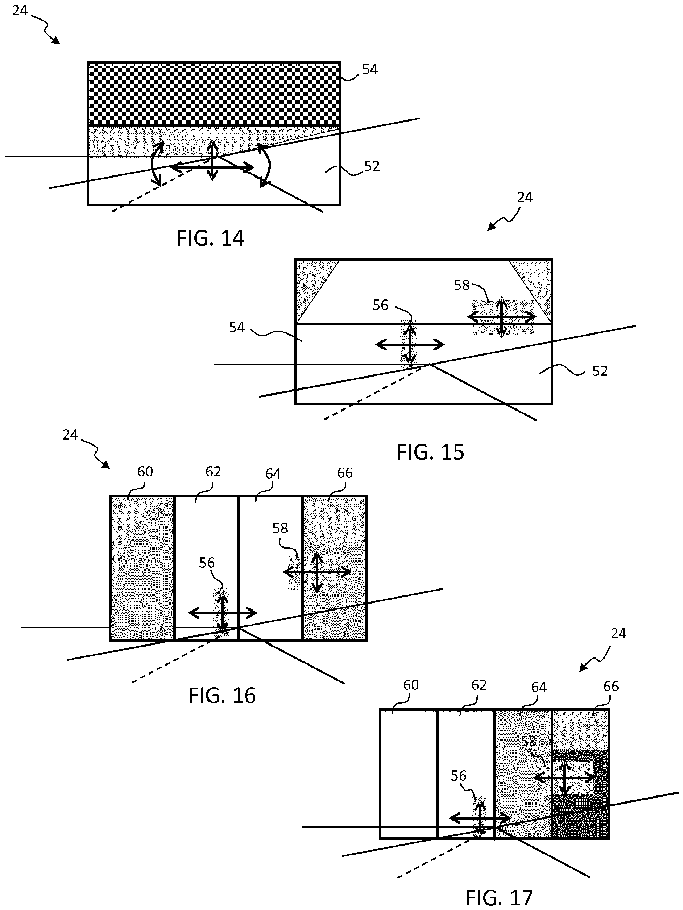

The invention is of particular interest for automotive headlighting applications. Figures 14-17 illustrate example applications of an embodiment of the system for producing a range of different output headlight configurations. Each figure schematically depicts a pixel configuration of the micro-display unit for generating a reflected output distribution suitable for producing a headlight beam having a particular beam profile.

Figure 14 shows a first example micro-display configuration, for producing alternately a low beam headlight, having an angled upper cut off, or a high beam headlight. The micro-display 24 is a digital mirror display (DMD), comprising an array of reflector pixels, each switchable between a high reflectivity ('on') mode and a low reflectivity ('off) mode. The grey checked regions of the display indicate regions which are being illuminated by the output beam pattern of the phosphor arrangement, but in which the pixels are switched to low-reflectivity 'off' mode. The white regions indicate regions which are being illuminated and in which the pixels are switched to high reflectivity 'on' mode. The black checked regions indicate regions which are not being illuminated by the phosphor screen arrangement.

In this simple example, there are only two regions established, a first 52 for generating the low beam and a second 54 for generating the high beam. The solid lines indicate the shape of the beam as it would be projected forward from a headlight unit comprising the system.

When the first segment 52 only is switched on, then just the low beam is produced. The pixels of the first segment 52 are configured so as to produce the characteristic angled 'kink' of a low-beam headlight profile - with this kink designed to angle the beam downwards on one side so as to avoid causing glare to oncoming vehicles on the other side of the road.

When just the low-beam is to be generated, the system is configured such that only the surface region of the phosphor screen arrangement (not shown) which maps onto the first segment 52 of the micro-display is illuminated by its respective laser source, and remaining laser sources are switched off. In this way, significant energy is conserved through not providing illumination across the second segment, which is configured in this beam mode to discard all incident light.

The system furthermore allows the specific shape of the low beam to be dynamically modified via the display (see arrows in Figure 14). For example, the upper cut off line may be moved upwards/downwards or left/right, or even re-shaped such that the angle of the cut off is rendered more acute or less acute for instance. These changes may be made in real time in response to certain driving scenarios - for example to provide super-fast levelling of the upper cut offline in response to rapid acceleration or driving over a bump for instance. Depending upon the resolution achievable by the segmented phosphor screen arrangement, these adjustments may also be accompanied by adjustments to the output pattern of the phosphor screen arrangement.

Note that the low beam output generated by this display 24 may not form the full low-beam distribution, but may for example form only the centre-most portion of a full low-beam distribution. The full low beam pattern may, in virtue of its large size, be difficult to create (in any practical way) by just a micro-display alone, so that in practical applications, the micro-display system may be supplemented by one or more LED illumination units, configured to provide the outer extended 'wings' of the low beam profile.

When the high beam is to be generated, both the first segment 52 and the second segment 54 of the micro-display are switched on. In this case, the system is configured such that surface regions of the phosphor screen arrangement which map onto both the first 52 and second 54 segment are illuminated by their respective laser sources.

Figure 15 schematically shows the DMD when configured for such a high beam-mode. In this example, the DMD has been used to clip the upper corners of the high beam (making the pattern semi-trapezoidal), by switching pixels occupying said corners into low-reflectivity mode. In addition, a dynamically moveable dark region 56 near the centre of the beam has been created (to allow prevention of glare to oncoming traffic) and also a similar dark region 58 nearer the side of the beam (to prevent full illumination of an oncoming road-sign which would otherwise cause glare to the driver himself).

In Figure 16 is illustrated a second example micro-display configuration, for producing in this case a high beam only, having dynamically adjustable total width and/or side-wise shape. The micro-display is shown divided into four different illumination segments 60, 62, 64, 66. Checked regions of the display indicate regions in which the pixels are switched to low-reflectivity 'off' mode, while white or grey regions indicate regions in which the pixels are switched to high reflectivity 'on' mode.

Furthermore, white regions indicate in particular regions which are being illuminated by the phosphor screen arrangement with full intensity light, while grey regions indicate regions which are being illuminated by the phosphor screen arrangement with half-intensity light. This embodiment requires that the laser sources illuminating the surface regions of the phosphor screen arrangement are configured to produce light of variable intensity, such that, depending upon the desired intensity distribution across the micro-display, the intensities of light provided to the phosphor surface regions may be modified.

In Figure 16 is shown a configuration in which all four segments are switched on. The second 62 and third 64 segments are being illuminated with full intensity light (to provide a bright centre to the beam pattern), while the first 60 and fourth 66 segments are being illuminated at only half intensity light to provide a tapered outer edge to the beam pattern. In addition, the upper left corner has been rounded via the DMD. Furthermore, as in the previous example, the DMD is configured to produce two movable dark zones 56, 58.

Figure 17 shows the configuration of Figure 16, but wherein the illumination pattern has been re-configured in response to changing road conditions (for example a sharp bend in the road to the left). More intensity is required to the left of the beam, and hence the first segment 60 is switched to full intensity, while segment three 64 is switched to half intensity. Segment four 66 is dimmed even further. The result is that the whole high-beam pattern is shifted left-ward.

Note that in alternative examples, the differing intensities of illumination across the different segments of the display 24 may be created, not through varying the intensity of the light provided to the respective phosphor surface regions, but instead through providing a DMD having pixels capable of switching between a range of different reflectivity modes. In this case, a uniform level of light may be provided to each of the segments of the display which are to at least reflect some light, and the differing output intensities generated through selectively controlling the reflectivity levels of the corresponding pixels.

In this case, the different intensity levels of the illumination sections will not create sudden steps in the output pattern, since intensity-tuning of the DMD may be used to 'smooth' the changes in intensity between neighbouring segments.

Note further that the illumination sections of the micro-display may, in examples, overlap. Such an overlap however can be compensated for through suitable control of the DMD: excess brightness caused by any such overlap may be 'repaired' or removed by simply adjusting the reflectivity intensities of the corresponding display pixels.

Although applications of embodiments of the invention have been described in particular relating to automotive headlighting, it should be understood that the invention has more general applicability to any other micro-display projection applications that combine laser light (e.g. blue) with phosphor wavelength conversion.

Other variations to the disclosed embodiments can be understood and effected by those skilled in the art in practicing the claimed invention, from a study of the drawings, the disclosure, and the appended claims. In the claims, the word "comprising" does not ex-elude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A lighting system comprising:
a plurality of laser source arrangements for generating a plurality of laser output beams (12), wherein each laser source arrangement is individually addressable;
a phosphor screen arrangement (18) to which the laser output beams (12) are directed for generating a combined phosphor-converted output beam pattern, wherein the phosphor screen arrangement comprises a plurality of surface regions (34), each surface region arranged for receiving light from one of the plurality of laser source arrangements; and
a controller for selectively addressing the plurality of laser source arrangements in order to generate from the phosphor screen arrangement (18) a phosphor-converted output beam pattern having a pre-determined output pattern, the phosphor-converted output beam pattern being formed of a plurality of co-operating component beam portions, each generated from a respective one of the plurality of surface regions (34) of the phosphor screen arrangement (18),
**characterized in that**
the phosphor-converted output beam pattern is projected via one or more optical elements (19) from the phosphor screen arrangement onto a pixelated display unit (24), the optical elements (19) being arranged between the phosphor screen arrangement (18) and the pixelated display unit (24) and adapted to project the phosphor-converted output beam pattern onto the pixelated display unit (24) in such a way that each of the component beam portions is imaged onto a respective receiving portion of the pixelated display unit (24).

2. The lighting system as claimed in claim 1, wherein the phosphor screen arrangement (18) comprises a plurality of spatially separated phosphor screen elements, each providing a respective one or more of the plurality of surface regions (34).

3. The lighting system as claimed in claim 1 or 2, wherein the pixelated display unit (24) is adapted to receive as input the phosphor-converted output beam pattern, and to generate as output a secondary output beam having a second predetermined output pattern.

4. The lighting system as claimed in claim 3, wherein the pixelated display unit (24) comprises an array of pixels (26), each pixel (26) being individually switchable between a high light-output mode state and a low light-output mode state, and wherein the second pre-determined output pattern is dependent upon the output mode states of the pixels (26).

5. The lighting system as claimed in claim 4, wherein the pre-determined output pattern of the phosphor converted output beam pattern is determined by the controller in dependence upon the output mode states of the array of pixels (26).

6. The lighting system as claimed in claim 5, wherein the predetermined output pattern of the phosphor converted output beam pattern is determined by the controller so as to minimise the amount of light received at pixels (26) of the array of pixels (26) which are in a low output mode state.

7. The lighting system as claimed in claim 1 or 2, wherein the pixelated display unit (24) comprises an array of pixels (26), and wherein the pixels (26) are each individually adjustable across a range of output mode states.

8. The lighting system as claimed in claim 1 or 2, wherein each laser source arrangement has an individually controllable light output intensity.

9. The lighting system as claimed in claim 1 or 2, wherein two or more of the laser output beams (12) are arranged to overlap at the phosphor screen arrangement (18).

10. The lighting system as claimed in claim 1 or 2, wherein each laser source arrangement comprises one or more laser diodes (40).

11. The lighting system as claimed in claim 1 or 2, wherein the pixelated display unit (24) is a digital mirror display, a digital mirror device or a reflective or transmissive LCD.

12. The lighting system as claimed in claim 1 or 2, wherein the respective receiving portions of the pixelated display unit (24), onto which the component beam portions are imaged, overlap, and wherein the pixelated display unit (24) is adapted for compensating brightness effects caused by such overlap.

13. A vehicle headlight comprising the lighting system as claimed in claim 1 or 2.

14. A method of generating a light beam, comprising:
controlling a plurality of laser source arrangements to generate a plurality of laser output beams (12) in a pre-determined pattern;
directing the plurality of laser output beams (12) toward a plurality of surface regions (34) of a receiving phosphor screen arrangement (18), to thereby generate from the phosphor screen arrangement (18) a phosphor-converted output beam pattern having a pre-determined output pattern, the phosphor-converted output beam pattern being formed of a plurality of co-operating component beam portions, each generated from a respective one of the plurality of surface regions (34) of the phosphor screen arrangement (18); and
projecting the phosphor-converted output beam pattern, via one or more optical elements (19), onto a pixelated display unit (24), the optical elements (19) being arranged between the phosphor screen arrangement (18) and the pixelated display unit (24) and adapted to project the phosphor-converted output beam pattern onto the pixelated display unit (24) in such a way that each of the component beam portions is imaged onto a respective receiving portion of the pixelated display unit (24).

## Patentansprüche

1. Beleuchtungssystem, Folgendes umfassend:
mehrere Laserquellenanordnungen zum Erzeugen mehrerer Laserausgabestrahlen (12), wobei jede Laserquellenanordnung einzeln ansprechbar ist,
eine Phosphorschirmanordnung (18), auf welche die Laserausgabestrahlen (12) gerichtet sind, um ein kombiniertes, durch Phosphor umgewandeltes Ausgabestrahlmuster zu erzeugen, wobei die Phosphorschirmanordnung mehrere Oberflächenbereiche (34) umfasst, wobei jeder Oberflächenbereich für das Empfangen von Licht von einer der mehreren Laserquellenanordnungen angeordnet ist, und
eine Steuerung zum wahlweisen Ansprechen der mehreren Laserquellenanordnungen, um aus der Phosphorschirmanordnung (18) ein durch Phosphor umgewandeltes Ausgabestrahlmuster mit einem festgelegten Ausgabemuster zu erzeugen, wobei das durch Phosphor umgewandelte Ausgabestrahlmuster von mehreren zusammenwirkenden Komponentenstrahlabschnitten gebildet ist, die jeweils aus einem entsprechenden der mehreren Oberflächenbereiche (34) der Phosphorschirmanordnung (18) erzeugt werden,
**dadurch gekennzeichnet, dass**
das durch Phosphor umgewandelte Ausgabestrahlmuster mittels eines oder mehrerer optischer Elemente (19) aus der Phosphorschirmanordnung auf eine verpixelte Anzeigeeinheit (24) projiziert wird, wobei die optischen Elemente (19) zwischen der Phosphorschirmanordnung (18) und der verpixelten Anzeigeeinheit (24) angeordnet und dafür eingerichtet sind, das durch Phosphor umgewandelte Ausgabestrahlmuster derart auf die verpixelte Anzeigeeinheit (24) zu projizieren, dass jeder der Komponentenstrahlabschnitte auf einem entsprechenden empfangenden Abschnitt der verpixelten Anzeigeeinheit (24) abgebildet wird.

2. Beleuchtungssystem nach Anspruch 1, wobei die Phosphorschirmanordnung (18) mehrere räumlich getrennte Phosphorschirmelemente umfasst, die jeweils einen oder mehrere entsprechende der mehreren Oberflächenbereiche (34) bereitstellen.

3. Beleuchtungssystem nach Anspruch 1 oder 2, wobei die verpixelte Anzeigeeinheit (24) dafür eingerichtet ist, das durch Phosphor umgewandelte Ausgabestrahlmuster als Eingabe zu empfangen und als Ausgabe einen sekundären Ausgabestrahl zu erzeugen, der ein zweites festgelegtes Ausgabemuster aufweist.

4. Beleuchtungssystem nach Anspruch 3, wobei die verpixelte Anzeigeeinheit (24) ein Feld von Pixeln (26) umfasst, wobei jedes Pixel (26) einzeln zwischen einem Moduszustand hoher Lichtausgabe und einem Moduszustand geringer Lichtausgabe schaltbar ist und wobei das zweite festgelegte Ausgabemuster von den Ausgabemoduszuständen der Pixel (26) abhängt.

5. Beleuchtungssystem nach Anspruch 4, wobei das festgelegte Ausgabemuster des durch Phosphor umgewandelten Ausgabestrahlmusters durch die Steuerung in Abhängigkeit von den Ausgabmoduszuständen des Feldes aus Pixeln (26) bestimmt wird.

6. Beleuchtungssystem nach Anspruch 5, wobei das festgelegte Ausgabemuster des durch Phosphor umgewandelten Ausgabestrahlmusters durch die Steuerung derart bestimmt wird, dass die Lichtmenge, die an Pixeln (26) des Feldes aus Pixeln (26) empfangen wird, die sich in einem Moduszustand geringer Lichtausgabe befinden, minimiert wird.

7. Beleuchtungssystem nach Anspruch 1 oder 2, wobei die verpixelte Anzeigeeinheit (24) ein Feld von Pixeln (26) umfasst und wobei die Pixel (26) über einen Bereich von Ausgabemoduszuständen einzeln einstellbar sind.

8. Beleuchtungssystem nach Anspruch 1 oder 2, wobei jede Laserquellenanordnung eine einzeln steuerbare Lichtausgabeintensität aufweist.

9. Beleuchtungssystem nach Anspruch 1 oder 2, wobei zwei oder mehr der Laserausgabestrahlen (12) dafür angeordnet sind, sich an der Phosphorschirmanordnung (18) zu überlappen.

10. Beleuchtungssystem nach Anspruch 1 oder 2, wobei jede Laserquellenanordnung eine oder mehrere Laserdioden (40) umfasst.

11. Beleuchtungssystem nach Anspruch 1 oder 2, wobei die verpixelte Anzeigeeinheit (24) eine Digitalspiegelanzeige, eine Digitalspiegelvorrichtung oder eine reflektierende oder eine lichtdurchlässige LCD ist.

12. Beleuchtungssystem nach Anspruch 1 oder 2, wobei sich die entsprechenden empfangenden Abschnitte der verpixelten Anzeigeeinheit (24), auf denen die Komponentenstrahlabschnitte abgebildet werden, überlappen und wobei die verpixelte Anzeigeeinheit (24) dafür eingerichtet ist, Helligkeitseffekte zu kompensieren, die durch eine derartige Überlappung verursacht werden.

13. Fahrzeugscheinwerfer, das Beleuchtungssystem nach Anspruch 1 oder 2 umfassend.

14. Verfahren zum Erzeugen eines Lichtstrahls, Folgendes umfassend:
Steuern mehrerer Laserquellenanordnungen, mehrere Laserausgabestrahlen (12) in einem festgelegten Muster zu erzeugen,
Richten der mehreren Laserausgabestrahlen (12) hin zu mehreren Oberflächenabschnitten (34) einer empfangenden Phosphorschirmanordnung (18), um dadurch aus der Phosphorschirmanordnung (18) ein durch Phosphor umgewandeltes Ausgabestrahlmuster mit einem festgelegten Ausgabemuster zu erzeugen, wobei das durch Phosphor umgewandelte Ausgabestrahlmuster aus mehreren zusammenwirkenden Komponentenstrahlabschnitten gebildet ist, die jeweils aus einem entsprechenden der mehreren Oberflächenbereiche (34) der Phosphorschirmanordnung (18) erzeugt werden, und
Projizieren des durch Phosphor umgewandelten Ausgabestrahlmusters mittels eines oder mehrerer optischer Elemente (19) auf eine verpixelte Anzeigeeinheit (24), wobei die optischen Elemente (19) zwischen der Phosphorschirmanordnung (18) und der verpixelten Anzeigeeinheit (24) angeordnet und dafür eingerichtet sind, das durch Phosphor umgewandelte Ausgabestrahlmuster derart auf die verpixelte Anzeigeeinheit (24) zu projizieren, dass jeder der Komponentenstrahlabschnitte auf einem entsprechenden empfangenden Abschnitt der verpixelten Anzeigeeinheit (24) abgebildet wird.

## Revendications

1. Système d'éclairage comprenant :
une pluralité d'agencements de sources laser pour générer une pluralité de faisceaux de sortie laser (12), dans lequel chaque agencement de sources laser est adressable individuellement ;
un agencement d'écran au phosphore (18) vers lequel les faisceaux de sortie laser (12) sont dirigés pour générer un motif de faisceaux de sortie convertis par phosphore combinés, dans lequel l'agencement d'écran au phosphore comprend une pluralité de régions de surface (34), chaque région de surface étant agencée pour recevoir la lumière provenant de l'un de la pluralité d'agencements de sources laser ; et
un contrôleur pour adresser de manière sélective la pluralité d'agencements de sources laser afin de générer, à partir de l'agencement d'écran au phosphore (18), un motif de faisceaux de sortie convertis par phosphore ayant un motif de sortie prédéterminé, le motif de faisceaux de sortie convertis par phosphore étant constitué d'une pluralité de parties de faisceaux constitutives coopérantes, générées chacune à partir de l'une respective de la pluralité de régions de surface (34) de l'agencement d'écran au phosphore (18),
**caractérisé en ce que**
le motif de faisceaux de sortie convertis par phosphore est projeté à travers un ou plusieurs éléments optiques (19) à partir de l'agencement d'écran au phosphore sur une unité d'affichage pixelisée (24), les éléments optiques (19) étant agencés entre l'agencement d'écran au phosphore (18) et l'unité d'affichage pixelisée (24) et conçus pour projeter le motif de faisceaux de sortie convertis par phosphore sur l'unité d'affichage pixelisée (24) de manière à ce qu'une image de chacune des parties de faisceaux constitutives soit formée sur une partie de réception respective de l'unité d'affichage pixelisée (24).

2. Système d'éclairage selon la revendication 1, dans lequel l'agencement d'écran au phosphore (18) comprend une pluralité d'éléments d'écran au phosphore séparés spatialement, réalisant chacun une ou plusieurs de la pluralité de régions de surface (34) respectives.

3. Système d'éclairage selon la revendication 1 ou 2, dans lequel l'unité d'affichage pixelisée (24) est conçue pour recevoir en tant qu'entrée le motif de faisceaux de sortie convertis par phosphore, et pour générer en tant que sortie un faisceau de sortie secondaire ayant un deuxième motif de sortie prédéterminé.

4. Système d'éclairage selon la revendication 3, dans lequel l'unité d'affichage pixelisée (24) comprend un réseau de pixels (26), chaque pixel (26) pouvant être commuté individuellement entre un état de mode de sortie de lumière forte et un état de mode de sortie de lumière faible, et dans lequel le deuxième motif de sortie prédéterminé dépend des états de mode de sortie des pixels (26).

5. Système d'éclairage selon la revendication 4, dans lequel le motif de sortie prédéterminé du motif de faisceaux de sortie convertis par phosphore est déterminé par le contrôleur sur la base des états de mode de sortie du réseau de pixels (26).

6. Système d'éclairage selon la revendication 5, dans lequel le motif de sortie prédéterminé du motif de faisceaux de sortie convertis par phosphore est déterminé par le contrôleur de manière à réduire à un minimum la quantité de lumière reçue au niveau des pixels (26) du réseau de pixels (26) qui sont dans un état de mode de sortie faible.

7. Système d'éclairage selon la revendication 1 ou 2, dans lequel l'unité d'affichage pixelisée (24) comprend un réseau de pixels (26), et dans lequel les pixels (26) peuvent être ajustés individuellement chacun dans une plage d'états de mode de sortie.

8. Système d'éclairage selon la revendication 1 ou 2, dans lequel chaque agencement de sources laser a une intensité de sortie de lumière pouvant être commandée individuellement.

9. Système d'éclairage selon la revendication 1 ou 2, dans lequel deux des faisceaux de sortie laser (12) ou plus sont agencés de manière à se superposer au niveau de l'agencement d'écran au phosphore (18).

10. Système d'éclairage selon la revendication 1 ou 2, dans lequel chaque agencement de sources laser comprend une ou plusieurs diodes laser (40).

11. Système d'éclairage selon la revendication 1 ou 2, dans lequel l'unité d'affichage pixelisée (24) est un afficheur à miroir numérique, un dispositif de miroir numérique ou un LCD à réflexion ou à transmission.

12. Système d'éclairage selon la revendication 1 ou 2, dans lequel les parties de réception respectives de l'unité d'affichage pixelisée (24), sur lesquelles les images des parties de faisceaux constitutives sont formées, se superposent, et dans lequel l'unité d'affichage pixelisée (24) est conçue pour compenser les effets de luminosité provoqués par cette superposition.

13. Phare de véhicule comprenant le système d'éclairage selon la revendication 1 ou 2.

14. Procédé de génération d'un faisceau de lumière, comprenant :
la commande d'une pluralité d'agencements de sources laser pour générer une pluralité de faisceaux de sortie laser (12) en un motif prédéterminé ;
l'orientation de la pluralité de faisceaux de sortie laser (12) vers une pluralité de régions de surface (34) d'un agencement d'écran au phosphore de réception (18), pour de ce fait générer, à partir de l'agencement d'écran au phosphore (18), un motif de faisceaux de sortie convertis par phosphore ayant un motif de sortie prédéterminé, le motif de faisceaux de sortie convertis par phosphore étant constitué d'une pluralité de parties de faisceaux constitutives coopérantes, générées chacune à partir de l'une respective de la pluralité de régions de surface (34) de l'agencement d'écran au phosphore (18) ; et
la projection du motif de faisceaux de sortie convertis par phosphore, à travers un ou plusieurs éléments optiques (19), sur une unité d'affichage pixelisée (24), les éléments optiques (19) étant agencés entre l'agencement d'écran au phosphore (18) et l'unité d'affichage pixelisée (24) et conçus pour projeter le motif de faisceaux de sortie convertis par phosphore sur l'unité d'affichage pixelisée (24) de manière à ce qu'une image de chacune des parties de faisceaux constitutives soit formée sur une partie de réception respective de l'unité d'affichage pixelisée (24).
